# EUROPÄISCHE PATENTSCHRIFT

(11) **EP 1 777 277 B1**
(45) Veröffentlichungstag und Bekanntmachung des Hinweises auf die Patenterteilung: **12.10.2011**
(21) Anmeldenummer: 05405601.5
(22) Anmeldetag: 24.10.2005
(51) Int. Cl.: C09J 175/04, C08J 9/00

(54) **Geschäumter Klebstoff**
Foamed adhesive
Adhésif moussé

(43) Veröffentlichungstag der Anmeldung: 25.04.2007
(73) Patentinhaber: 3A Technology & Management AG, 8212 Neuhausen am Rheinfall (CH)
(72) Erfinder: Behre, Kurt, 49078 Osnabrück (DE)

(56) Entgegenhaltungen:
- EP-A- 0 679 670
- EP-A- 1 312 393
- WO-A-97/47681
- DE-A1- 10 311 607
- DE-A1- 10 352 907
- GB-A- 1 428 834
- US-A- 4 636 425

## Beschreibung

Die Erfindung betrifft ein Verfahren zur Herstellung einer Klebefolie nach dem Oberbegriff des Anspruchs 1.

Der Auftrag flächiger Klebstoffe auf Substratbahnen erfolgt üblicherweise als Extrusionsbeschichtung oder in der Form von Dispersionen über Rakelsysteme. Zur Aushärtung des Klebstoffs wird der Klebverbindung Wärme zugeführt, wobei die miteinander verklebten Teile beispielsweise einen Trockenkanal durchlaufen.

Bei der Verklebung von geschäumten Teilen mit kompakten Teilen, wie z. B. von Leichtstoffplatten aus geschäumtem Kunststoff mit der Dachhaut eines Fahrzeugs zwecks Dachversteifung vom Fahrzeuginnem her, wird die Oberfläche der Kunststoffschäume mit Klebstoff bestrichen. Die maximal erlaubten Kräfte der auf diese Weise hergestellten Systeme richten sich nach dem schwächsten Glied der Kette, d.h. im Allgemeinen nach den verwendeten Schaumsystemen.

Ein Nachteil von mit einem kompakten Klebstoff verklebten Teilen aus geschäumtem Kunststoff liegt darin, dass ein Riss bzw. eine Materialtrennung stets in der Schaumebene erfolgt.

Aus DE-A-103 52 907 ist ein Klebstoff der eingangs genannten Art bekannt.

Der Erfindung liegt die Aufgabe zugrunde, ein Verfahren der eingangs genannten Art zu schaffen, wobei die Klebefolie sich insbesondere zur Verklebung von Teilen aus geschäumtem Kunststoff eignen soll.

Zur erfindungsgemässen Lösung der Aufgabe führt ein Verfahren mit den Merkmalen des Anspruchs 1.

Der geschäumte Klebstoff weist über die gesamte Schaumstruktur gleiche Eigenschaften wie ein kompakter Klebstoff auf. Während ein kompakter Klebstoff jedoch nur an der Oberfläche von geschäumten Materialien Kräfte übertragen bzw. aufnehmen kann, ist der erfindungsgemäss geschäumte Klebstoff mit seiner gesamten Masse kraftaufnehmend, so dass ein Riss bzw. eine Materialtrennung immer im Klebstoff und nicht in der Schaumstruktur eines mit dem Klebstoff verklebten Teils aus geschäumtem Kunststoff erfolgt.

Ein weiterer Vorteil des geschäumten Klebstoffs liegt darin, dass wegen der gegenüber kompakten Klebstoffen grösseren Schichtdicke bei Kompression Toleranzen leichter überbrückt werden können.

Der Klebstoff mit der Gas erzeugenden Substanz oder mit dem gelösten Gas ist zur Bildung der Klebefolie zwischen zwei Trennbahnen oder - folien, oder zwischen einer Trennfolie und einer Trägermaterialbahn angeordnet, wobei der Klebstoff in der Form einer geschäumten Klebefolie vorliegt.

Bevorzugte Klebstoffe sind Klebstoff auf der Basis von Polyurethan (PUR), insbesondere Klebstoffe auf der Basis von thermoplastischem Polyurethan (TPU), Klebmassen auf Acrylatbasis sowie weitere gelöste Klebstoffe auf Dispersions- oder Lösungsmittelbasis.

Bei der Herstellung der geschäumten Klebefolie wird der Klebstoff zwischen den Trennschichten bzw. Trenn- oder Trägermaterialbahnen zur geschäumten Klebefolie aufgeschäumt.

Ein besonders bevorzugter Anwendungsbereich des erfindungsgemässen Klebstoffs ist die Klebverbindung von Teilen mit wenigstens einem Teil aus einem geschäumten Kunststoff.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- - Fig. 1: einen Querschnitt durch eine aufgeschäumte Klebefolie;
- - Fig. 2: einen Querschnitt durch eine unter Verwendung der aufgeschäumten Klebefolie von Fig. 1 hergestellte Verbundplatte;
- - Fig. 3: einen Längsschnitt durch eine Anordnung zur kontinuierlichen Herstellung der Klebefolie von Fig. 1.

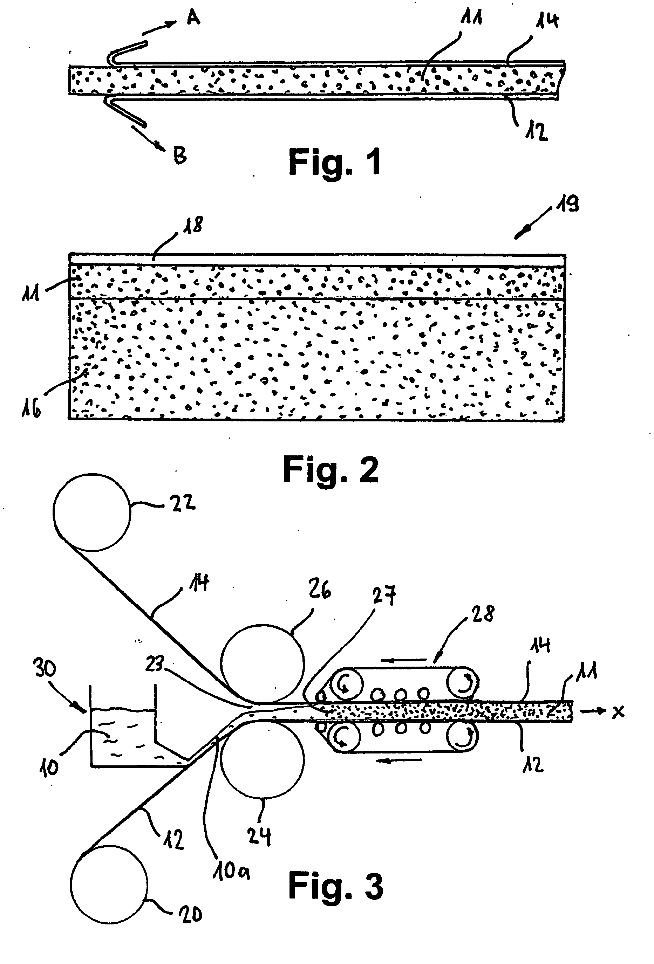

Eine in Fig.1 dargestellte geschäumte Klebefolie 11 besteht aus einem vollständig aufgeschäumten, mit einem Aufschäum- oder Trennmittel versetzten Klebstoff 10, wobei die geschäumte Klebefolie 11 jedoch noch nicht ausgehärtet ist. Auf beiden Seiten der Klebefolie 11 ist je eine Trennfolie 12, 14 angeordnet. Die Trennfolien 12, 14 sind beispielsweise Folien aus Polyethylen (PE) oder silikonisierte Papierbahnen, die an der Klebefolie 11 nur schwach haften und sich leicht von der Oberfläche der Klebefolie 11 abziehen lassen.

Der Klebstoff 10 ist beispielsweise ein Klebstoff auf der Basis von thermoplastischem Polyurethan (TPU) oder eine Klebmasse auf Acrylatbasis. Als Aufschäum- oder Treibmittel dienen je nach gewünschtem Schäumungsgrad z. B. CO₂ oder niedrig siedende Verbindungen, wie FCKW, FKW oder Pentan, die durch die Reaktionswärme in den Gaszustand überführt werden und dabei das sich bildende Polyurethan aufblähen.

Eine in Fig. 2 gezeigte Verbundplatte 19 besteht aus einer Leichtbauplatte 16 aus einem geschäumten Kunststoff, z. B. aus Polyurethan, die mittels einer Klebefolie 11 aus geschäumtem Kunststoff, z. B. aus thermoplastischem Polyurethan (TPU), mit einer Metallfolie oder einem Metallblech 18 verbunden ist.

Zur Herstellung der Verbundplatte 19 wird zunächst eine der Trennfolien 12, 14 in einem Randbereich von der Klebefolie 11 gelöst und in Pfeilrichtung A bzw. B von der Oberfläche der Klebefolie 11 abgezogen. Die von der ersten Trennfolie 12 befreite Oberfläche der Klebfolie 11 wird haftend an die zur Verklebung vorgesehene Oberfläche der Leichtbauplatte 16 angelegt. Nach dem Abziehen der zweiten Trennfolie 14 wird die Metallfolie 18 mit der Klebefolie 11 in Kontakt gebracht.

Die Verklebung erfolgt je nach Klebstoff bei Raumtemperatur oder bei erhöhter Temperatur, wobei der Verbund während der Dauer der Klebstaffaushärtung beispielsweise in einer Presse zwischen Platten eingespannt ist.

Bei der in Fig. 3 dargestellten kontinuierlichen Herstellung der geschäumten Klebefolie 11 von Fig. 1 werden die Trennfolien 12, 14 ab je einem Coil 20, 22 in den Spalt eines Umlenkrollenpaares 24, 26 geführt.

Von einer Kleberauftragstation 30 wird der mit einem Aufschäum- oder Treibmittel versetzte Klebstoff 10 auf die erste Trennfolie 12 aufgetragen. Die auf diese Weise gebildete Klebstoffschicht 10a wandert mit der ersten Trennfolie 12 in Laufrichtung x der Trennfolien und wird im Spalt 23 zwischen den Umlenkrollen 24, 26 von der zweiten Trennfolie 14 überdeckt. Die beiden Trennfolien 12, 14 mit der dazwischen angeordneten, Treibmittel enthaltenden, bereits teilweise expandierten Klebstoffschicht 10a werden nachfolgend in den Spalt 27 einer Doppelbandpresse 28 geführt.

In der Doppelbandpresse 28 schäumt die Klebstoffschicht 10a bei erhöhter Temperatur auf und füllt dabei den Hohlraum zwischen den beiden Trennfolien 12, 14. Beim Austritt der Klebefolie 11 mit den beidseitig angeordneten Trennfolien 12, 14 aus der Doppelbandpresse 28 ist der Aufschäumvorgang beendet. Die Klebefolie 11 kann nach dem Austritt aus der Doppelbandpresse 28 aufgewickelt oder direkt zu gewünschte Längen geschnitten werden.

Anstelle der einen Trennfolie 14 kann ein Trägermaterial eingesetzt werden; in diesem Fall ist die Klebstoffschicht 10a zwischen der Trennfolie 12 und dem Trägermaterial 14 angeordnet.

## Patentansprüche

1. Verfahren zur Herstellung einer Klebefolie (11) aus einem Klebstoff zum Verkleben von zwei Teilen, wobei dem Klebstoff (10) In flüssigem Zustand zum Aufschäumen des Klebstoffs eine Gas erzeugende Substanz beigegeben oder ein Gas im Klebstoff (10) gelöst wird,
**dadurch gekennzeichnet, dass**
der Klebstoff (10, 10a) mit der Gas erzeugenden Substanz oder mit dem gelösten Gas kontinuierlich zwischen zwei Trennbahnen (12, 14) oder zwischen eine Trennbahn (12) und eine Trägermaterlalbahn (14) eingetragen wird und zwischen den Trenn- oder Trägermaterlalbahnen (12, 14) zu einer geschäumten Klebefolie (11) ausreagiert.

2. Verfahren nach Anspruch 1, **dadurch gekennzeichnet, dass** der Klebstoff (10) ein Klebstoff auf der Basis von Polyurethan (PUR), Insbesondere ein Klebstoff auf der Basis von thermoplastischem Polyurethan (TPU), eine Klebmasse auf Acrylatbasis oder ein anderer gelöster Klebstoff auf Dispersions- oder Lösungsmittelbasis ist.

## Claims

1. Method for producing an adhesive film (11), made of an adhesive, for gluing two parts together, a gas-producing substance being added to the adhesive (10) in a liquid state to foam the adhesive or a gas being dissolved in the adhesive (10), **characterised in that** the adhesive (10, 10a), along with the gas-producing substance or along with the dissolved gas, is introduced continuously between two separating webs (12, 14) or between a separating web (12) and a support material web (14), and fully cures between the separating or support material webs (12, 14) to form a foamed adhesive film (11).

2. Method according to claim 1, **characterised in that** the adhesive (10) is an adhesive based on polyurethane (PUR), in particular an adhesive based on thermoplastic polyurethane (TPU), an acrylate-based glue or another dissolved dispersion-based or solvent-based adhesive.

## Revendications

1. Procédé de réalisation d'une feuille adhésive (11) constituée d'un adhésif pour le collage de deux parties, une substance générant un gaz étant ajoutée à l'état liquide à l'adhésif (10) pour obtenir le moussage de l'adhésif ou un gaz étant mis en solution dans l'adhésif (10),
**caractérisé en ce que** l'adhésif (10, 10a) avec la substance générant un gaz ou avec le gaz dissous est inséré en continu entre deux bandes de séparation (12, 14) ou entre une bande de séparation (12) et une bande de matériau support (14) et induit une réaction entre les bandes de séparation ou les bandes de matériau support (12, 14) pour former une feuille adhésive (11) expansée.

2. Procédé selon la revendication 1, **caractérisé en ce que** l'adhésif (10) est un adhésif à base de polyuréthanne (PUR), en particulier un adhésif à base de polyuréthanne thermoplastique (TPU), une pâte adhésive à base d'acrylate ou un autre adhésif dissous à base d'agent de dispersion ou de solvant.
